# EUROPÄISCHE PATENTSCHRIFT

(11) **EP 2 976 631 B1**
(45) Veröffentlichungstag und Bekanntmachung des Hinweises auf die Patenterteilung: **01.03.2017**
(21) Anmeldenummer: 14713412.6
(22) Anmeldetag: 19.03.2014
(51) Int. Cl.: G01N 27/407, G01N 33/00

(54) **SENSORVORRICHTUNG**
SENSOR DEVICE
DISPOSITIF DE DÉTECTION

(30) Priorität: 20.03.2013 DE 102013204911
(43) Veröffentlichungstag der Anmeldung: 27.01.2016
(73) Patentinhaber: Continental Automotive GmbH, 30165 Hannover (DE)
(72) Erfinder: ANTE, Johannes, 93055 Regensburg (DE); GRASS, Philippe, 93053 Regensburg (DE)
(86) Internationale Anmeldenummer: PCT/EP2014/055531
(87) Internationale Veröffentlichungsnummer: WO 2014/147139

(56) Entgegenhaltungen:
- WO-A1-2005/090959
- DE-A1- 19 523 978
- DE-A1-102007 042 975
- DE-C1- 4 324 659
- US-A1- 2011 011 152

## Beschreibung

Die Erfindung betrifft eine Sensorvorrichtung, die ein Sensorelement zur Erfassung eines Gasgehalts in einer Umgebung der Sensorvorrichtung umfasst.

Gassensoren insbesondere Sauerstoffsensoren werden im Ansaugtrakt oder im Abgastrakt von Verbrennungsmotoren, wie beispielsweise Otto- oder Dieselmotoren, verwendet. Derartige Sauerstoffsensoren sind beispielsweise lineare Lambdasensoren. Solche Lambdasensoren weisen überwiegend ein Sensorelement auf, das auf näherungsweise 800 °C aufgeheizt werden muss.

US 2011/011152 offenbart einen artverwandten Abgassensor.

Für Abgassensoren werden hochtemperaturgeeignete Gehäuse genutzt. Diese Abgassensoren weisen ein Schutzkappensystem auf, das neben einem mechanischen Schutz unter anderem folgende Aufgaben aufweist:
- Sicherstellen eines Gasaustauschs am Gaszutritt des Messelements,
- Schutz vor Auskühlung bei hoher Gasströmung,
- Schutz vor Wassertröpfchen und
- Schutz vor Wasserschlag.

Diese Schutzkappensysteme sind sehr aufwendig.

Die Aufgabe, die der Erfindung zugrunde liegt, ist es, eine Sensorvorrichtung, insbesondere für einen Ansaugtrakt einer Verbrennungsmaschine, zu schaffen, die eine einfache und kostengünstige Herstellung der Sensorvorrichtung ermöglicht.

Die Aufgabe wird gelöst durch die Merkmale des unabhängigen Patentanspruchs. Vorteilhafte Ausgestaltungen sind in den Unteransprüchen gekennzeichnet.

Die Erfindung zeichnet sich aus durch eine Sensorvorrichtung. Die Sensorvorrichtung umfasst einen Gehäusekörper, der einen in dem Gehäusekörper ausgebildeten Strömungskanal aufweist. Ferner weist die Sensorvorrichtung einen in dem Gehäusekörper ausgebildeten Bypass auf, der an einem Abzweig von dem Strömungskanal abzweigt. Der Bypass weist eine Wandung mit einer Öffnung auf. Ferner umfasst die Sensorvorrichtung ein Sensorelement zur Erfassung eines Gasgehalts in einer Umgebung des Sensorelements, das zumindest teilweise in der Öffnung in der Wandung des Bypasses angeordnet ist. Das Sensorelement ist ausgebildet zur Erfassung eines Gasgehalts in einer Umgebung des Sensorelements. Das Sensorelement umfasst einen Sensorkörper. Das Sensorelement umfasst des Weiteren eine Elektrodenkammer, die in dem Sensorkörper ausgebildet ist. Das Sensorelement umfasst ein Heizelement, das in dem Sensorkörper eingebettet ist, mittels dessen ein vorgegebener Bereich um die Elektrodenkammer auf eine vorgegebene Betriebstemperatur beheizbar ist. Das Sensorelement umfasst eine Längsachse. Des Weiteren umfasst das Sensorelement einen Einlasskanal, der mit der Elektrodenkammer gekoppelt ist und der einen Einlass an der Oberfläche des Sensorkörpers aufweist. Des Weiteren umfasst das Sensorelement eine thermische Isolationshülse auf dem Sensorkörper, die sich mindestens axial in Richtung der Längsachse über den Bereich der Elektrodenkammer erstreckt.

Die Sensorvorrichtung wird vorzugsweise in einem Ansaugtrakt einer Brennkraftmaschine angeordnet. Vorteilhafterweise ermöglicht die Kanalstruktur mit Strömungskanal und Bypass eine geringe Gasmenge aus einem Hauptgasstrom in den Ansaugtrakt auszukoppeln und an dem Sensorelement vorbeizuführen. Die in dem Bypass und am Sensorelement herrschende Strömungsgeschwindigkeit ist eine Funktion der Strömungsgeschwindigkeit des Hauptgasstroms. Die Kanalstruktur ermöglicht, dass jederzeit ein Gasaustausch sichergestellt ist.

Der Gehäusekörper ermöglicht einen guten Schutz des Sensorelements. Die Sensorvorrichtung mit der Kanalstruktur ermöglicht ein schnelles Ansprechen des Sensorelements. Der Gehäusekörper kann länglich und damit kostengünstig ausgebildet sein. Eine runde Ausbildung des Gehäusekörpers ist nicht erforderlich.

Mittels der thermischen Isolation im Bereich der Elektrodenkammer erhält das Sensorelement eine sehr gute Thermoschockbeständigkeit, ohne dass sich hierbei die Messgeschwindigkeit ändert. Des Weiteren fällt aufgrund der Isolation der Wärmetransport durch Konvektion zu einem großen Teil weg. Hierdurch kann mehr Strömung am Sensorelement akzeptiert werden, womit die Ansprechgeschwindigkeit des Sensorelements verbessert werden kann.

Bei der vorgegebenen Betriebstemperatur handelt es sich beispielsweise um eine Temperatur im Bereich zwischen 600 °C und 850 °C.

In einer vorteilhaften Ausgestaltung weist das Sensorelement eine im Wesentlichen senkrecht zur Längsachse verlaufende Stirnfläche des Sensorkörpers auf, wobei die Stirnfläche des Sensorkörpers den Einlass aufweist und in dem Bypass angeordnet ist. Insbesondere ist das Sensorelement derart angeordnet, dass die Stirnfläche und die Wandung um die Öffnung herum plan verlaufen, so dass Verwirbelungen vermieden werden können.

In einer weiteren vorteilhaften Ausgestaltung ist der Bypass U-förmig ausgebildet. Dies ermöglicht eine einfache Herstellung des Bypasses.

In einer weiteren vorteilhaften Ausgestaltung ist der Bypass Omega-förmig ausgebildet. Vorteilhafterweise ermöglicht eine Omega-förmige Ausbildung eine einfache Herstellung und ermöglicht einen Strömungsverlauf in dem Bypass zu optimieren. Omega-förmig entspricht in etwa hufeisenförmig.

In einer weiteren vorteilhaften Ausgestaltung weist der Bypass zumindest ein Strömungselement auf, das angeordnet und ausgebildet ist, Verwirbelungen in dem Bypass zumindest zu reduzieren. Dies hat den Vorteil, dass Verfälschungen von Messergebnissen aufgrund von Verwirbelungen in dem Bypass weitestgehend vermieden werden können.

In einer weiteren vorteilhaften Ausgestaltung weist der Bypass zumindest eine Kavität auf zur Abführung von Fremdpartikeln aus dem Bypass. Vorteilhafterweise können so beispielsweise Wasserteilchen aus dem Bypass abgeführt werden.

In einer weiteren vorteilhaften Ausgestaltung ist die Stirnfläche frei von der Isolationshülse und die Isolationshülse ist von der Stirnfläche vorgegeben beabstandet. Die Stirnfläche ist beispielsweise derart vorgegeben beabstandet, dass das Sensorelement leicht aus der Isolationshülse herausragt. Auf diese Weise ist der Gaseintritt von der Isolationshülse nicht betroffen.

In einer weiteren vorteilhaften Ausgestaltung weist der Gehäusekörper Kunststoff auf oder besteht aus Kunststoff. Dies ermöglicht eine kostengünstige Herstellung der Sensorvorrichtung. Der Kunststoff ist vorzugsweise temperaturbeständig bis zu einer maximalen Temperatur von 125 °C bis 200 °C.

In einer weiteren vorteilhaften Ausgestaltung weist der Gehäusekörper Aluminium auf oder besteht aus Aluminium. Auch dies ermöglicht eine kostengünstige Herstellung der Sensorvorrichtung.

In einer weiteren vorteilhaften Ausgestaltung weist die Sensorvorrichtung ein Drucksensorelement und/oder ein Temperatursensorelement auf. Dies hat den Vorteil, dass keine weitere separate Drucksensorvorrichtung beziehungsweise Temperatursensorvorrichtung in einer Nachbarschaft der Sensorvorrichtung erforderlich ist. Für ein korrektes Ermitteln des Sauerstoffgehalts ist im Allgemeinen eine Druckkorrektur erforderlich. Die Bereitstellung des Drucksensorelements in der Sensorvorrichtung ermöglicht, dass keine weitere separate Drucksensorvorrichtung in einer Nachbarschaft der Sensorvorrichtung anzuordnen ist. Die Sensorvorrichtung mit dem Gehäusekörper ermöglicht, dass das Temperatursensorelement derart angeordnet werden kann, dass es einen ausreichenden Abstand zu dem beheizten Sensorelement aufweist und somit eine Temperaturmessung neben dem Sensorelement ausreichend zuverlässig möglich ist.

In einer weiteren vorteilhaften Ausgestaltung weist die Sensorvorrichtung einen Kühlkörper auf, der in einem vorgegebenen Bereich mit dem Sensorkörper gekoppelt ist, wobei der vorgegebene Bereich sich axial in Richtung der Längsachse außerhalb des Bereichs, in der die Isolationshülse angeordnet ist, angeordnet ist. Der Kühlkörper weist vorzugsweise einen sehr gut wärmeleitfähigen Werkstoff, zum Beispiel ein Metall, auf.

In einer weiteren vorteilhaften Ausgestaltung weist die Isolationshülse Keramikfasern und/oder Metallfasern auf. Gerade derartige Fasern sind hochtemperaturbeständig und hierbei möglichst wenig wärmeleitend. Die Isolationshülse besteht beispielsweise aus einer ungefähr 2 mm dicken Keramikfaserwolle.

In einer weiteren vorteilhaften Ausgestaltung sind die Keramikfasern und/oder die Metallfasern in einer Metallhülse angeordnet. Die Metallhülse ist beispielsweise fest mit dem Sensorelement verschweißt, wodurch eine möglichst stabile Isolationshülse realisiert werden kann.

In einer weiteren vorteilhaften Ausgestaltung sind die Keramikfasern und/oder die Metallfasern von der Metallhülse durch einen Luftspalt beabstandet. Hierdurch kann eine weitere Isolierwirkung durch den Luftspalt hergestellt werden. Ausführungsbeispiele der Erfindung sind im Folgenden anhand der schematischen Zeichnungen näher erläutert. Es zeigen:
- Figur 1: eine Sensorvorrichtung für einen Ansaugtrakt,
- Figur 2: ein Sensorelement zur Erfassung eines Gasgehalts und
- Figur 3: eine weitere Ansicht des Sensorelements zur Erfassung des Gasgehalts.

Elemente gleicher Konstruktion oder Funktion sind figurenübergreifend mit den gleichen Bezugszeichen gekennzeichnet.

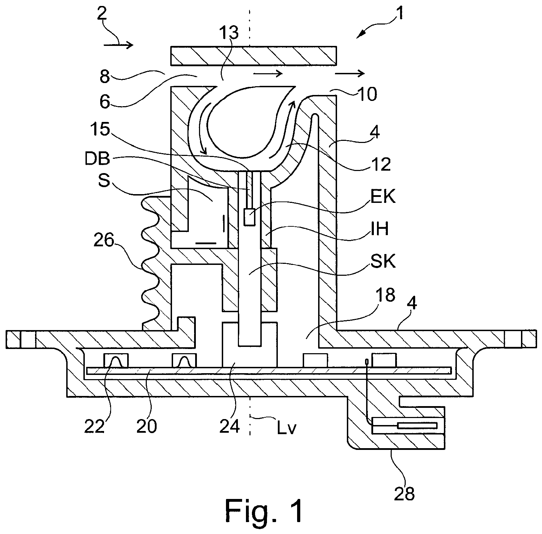

Figur 1 zeigt eine Sensorvorrichtung 1, die einem Hauptkanal angeordnet ist. In dem Hauptkanal strömt ein Hauptgasstrom 2. Bei dem Hauptkanal kann es sich insbesondere um eine Ansaugleitung in einer Brennkraftmaschine handeln, durch die ein angesaugter Luftstrom strömt.

Die Sensorvorrichtung 1 umfasst einen Gehäusekörper 4. In dem Gehäusekörper 4 ist ein Strömungskanal 6 angeordnet mit einem Einlass 8 und einem Auslass 10. Der Strömungskanal 6 kann beispielsweise geradlinig in dem Gehäusekörper 4 ausgebildet sein und ist durch eine Ausrichtung des Gehäusekörpers 4 bevorzugt so angeordnet, dass sein Einlass 8 einer Hauptströmungsrichtung der vorbeiströmenden Luftmasse entgegengerichtet ist.

Die Sensorvorrichtung 1 weist eine Vorrichtungslängsachse Lv auf. Ferner weist die Sensorvorrichtung 1 einen ersten Endbereich und einen zweiten Endbereich auf. In dem ersten Endbereich ist der Strömungskanal 6 angeordnet. Die Sensorvorrichtung 1 wird beispielsweise hängend in die Ansaugleitung eingebaut, so dass in einem eingebauten Zustand die Vorrichtungslängsachse Lv im Wesentlichen senkrecht zu dem Hauptkanal verläuft und der zweite Endbereich mit einer Wand des Hauptkanals mechanisch verbunden ist.

In dem Gehäusekörper 4 ist ferner ein Bypass 12 angeordnet, der an einem Abzweig 13 von dem Strömungskanal 6 abzweigt.

In Figur 1 ist der Bypass 12 beispielhaft Omega-förmig, ausgebildet. Anstatt Omega-förmig kann auch der Begriff hufeisenförmig genutzt werden. Der Bypass 12 kann alternativ beispielsweise auch U-förmig ausgebildet sein. Der Bypass 12 weist beispielsweise zumindest ein Strömungselement auf, das angeordnet und ausgebildet ist, Verwirbelungen in dem Bypass 12 zumindest zu reduzieren. Ferner weist der Bypass 12 zumindest eine Kavität auf zur Abführung von Fremdpartikel aus dem Bypass 12.

Der Bypass 12 weist eine Wandung mit einer Öffnung auf. In der Öffnung der Wandung ist zumindest teilweise ein Sensorelement S zur Erfassung eines Gasgehalts in einer Umgebung des Sensorelements S angeordnet. In dem Bypass 12 ist ein Einlass EA des Sensorelements S angeordnet. Das Sensorelement S ist insbesondere als ein Sauerstoffsensor ausgeführt, der einen Sauerstoffgehalt in der Umgebung des Sensorelements S feststellen kann.

Das Sensorelement S weist einen Sensorkörper SK, eine Längsachse und eine im Wesentlichen senkrecht zur Längsachse des Sensorkörpers SK verlaufende Stirnfläche SF des Sensorkörpers SK auf.

Die Öffnung in der Wandung des Bypasses 12 ist vorzugsweise entlang der Vorrichtungslängsachse Lv der Sensorvorrichtung 1 in dem Gehäusekörper 4 ausgebildet, so dass sich das Sensorelement S ausgehend von der Stirnfläche SF, die in dem Bypass 12 angeordnet ist, entlang der Vorrichtungslängssachse in Richtung des zweiten Endbereichs der Sensorvorrichtung 1 erstreckt.

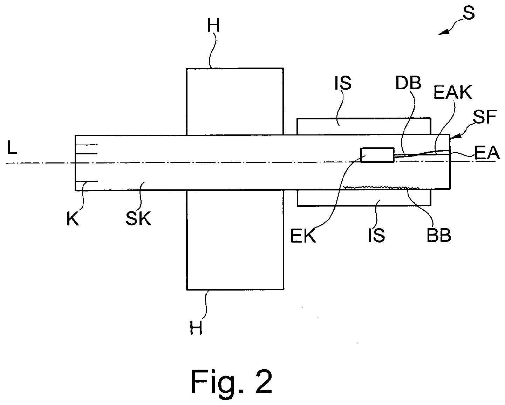

Ein detaillierter Aufbau des Sensorelements S ist in Figur 2 gezeigt.

Der Gehäusekörper 4 der Sensorvorrichtung 1 (Figur 1) weist einen Elektronikraum 18 auf, der von dem Strömungskanal 6 und dem Bypass 12 getrennt ist. Die Sensorvorrichtung 1 weist eine Leiterplatte 20 auf, die in oder im Wesentlichen in dem Elektronikraum 18 angeordnet ist. Auf der Leiterplatte 20 sind beispielsweise verschiedene Elektronikbauteile 22 angeordnet.

Ferner ist auf der Leiterplatte 20 ein Kontaktelement 24 angeordnet zur mechanischen und/oder elektrischen Kopplung des Sensorelements S mit der Leiterplatte 20. Das Kontaktelement 24 kann beispielsweise genutzt werden zur Kopplung von Leitungen, die auf oder in dem Sensorkörper SK des Sensorelements S angeordnet sind, mit Leiterbahnen der Leiterplatte 20. Die Kopplung kann beispielsweise mittels Kabel, Wirebonds oder Leadframes erfolgen.

Der Gehäusekörper 4 ist vorzugsweise zumindest zweiteilig ausgebildet. Der Gehäusekörper 4 weist beispielsweise einen Kunststoff auf oder besteht aus einem Kunststoff. Der Kunststoff ist vorzugsweise temperaturbeständig bis zu einer maximalen Temperatur von 125 °C bis 200 °C. Der Kunststoff umfasst beispielsweise Polypropylen und/oder Polyamide.

Zusätzlich oder alternativ kann der Gehäuseköper Aluminium aufweisen.

Der Strömungskanal 6 und der Bypass 12 sind beispielsweise in einem ersten Gehäuseköper angeordnet, der mit einem zweiten Gehäusekörper verbindbar ist.

Die Sensorvorrichtung 1 weist einen Kühlkörper 26 auf, der in einem vorgegebenen Bereich mit dem Sensorkörper SK gekoppelt ist, wobei der vorgegebene Bereich axial in Richtung der Längsachse außerhalb des Bereichs, in der eine Isolationshülse IH angeordnet ist, angeordnet ist. Der Kühlkörper 26 ist beispielsweise derart ausgebildet, dass er den Sensorkörper SK koppelt mit dem Gehäusekörper 4 und somit auch die Funktion eines Halters H aufweist.

Die Sensorvorrichtung 1 weist beispielsweise ein Drucksensorelement und/oder ein Temperatursensorelement auf. Das Drucksensorelement und/oder Temperatursensorelement sind hierbei beispielsweise neben dem Bypass 12 angeordnet. Da das Sensorelement S nur stirnseitig offen ist und bezogen auf die Vorrichtungslängsachse Lv ausgehend von der Öffnung in der Wandung des Bypasses 12 axial in Richtung des zweiten Endbereichs angeordnet ist, tritt nur eine geringe Verfälschung der Temperaturmessung auf.

Ferner weist die Sensorvorrichtung 1 einen Stecker 28 auf zur elektrischen Kopplung der Sensorvorrichtung 1 mit zum Beispiel geeigneten Auswerteeinheiten. Der Stecker 28 ist beispielsweise vorgegeben gekoppelt mit der Leiterplatte 20.

Der Gehäusekörper 4 ist beispielsweise derart ausgebildet, dass ein winkelrichtiger Einbau in der Ansaugleitung sichergestellt werden kann. Solch ein winkelcodierter Einbau der Sensorvorrichtung 1 ermöglicht, dass mit geringem Aufwand sichergestellt werden kann, dass ein ausreichender Gasaustausch zwischen dem Hauptkanal und der Sensorvorrichtung 1 erfolgen kann.

Figur 2 zeigt das Sensorelement S zur Erfassung eines Gasgehalts in einer Umgebung des Sensorelements S. Das Sensorelement S ist insbesondere als ein Sauerstoffsensor ausgeführt, der einen Sauerstoffgehalt in der Umgebung des Sensorelements S feststellen kann. Das Sensorelement S umfasst einen Sensorkörper SK. Der Sensorkörper SK umfasst beispielsweise ein Substrat aus Yttrium-stabilisiertem Zirkonoxid YSZ. In dem Sensorkörper SK ist eine Elektrodenkammer EK ausgebildet. In dem Sensorkörper SK ist des Weiteren ein Heizelement eingebettet, mittels dessen ein vorgegebener Bereich BB um die Elektrodenkammer EK auf eine vorgegebene Betriebstemperatur beheizbar ist. Die vorgegebene Betriebstemperatur liegt beispielsweise zwischen 600 °C und 850 °C beziehungsweise ungefähr bei 700 °C.

Der Sensorkörper SK weist einen Einlasskanal EAK auf, der mit der Elektrodenkammer EK gekoppelt ist und der den Einlass EA in der Oberfläche des Sensorkörpers SK aufweist, wobei der Einlass EA an der Stirnfläche SF des Sensorkörpers SK ausgebildet ist. Der Einlass EA ermöglicht einen Gaszutritt 15 von dem Bypass 12 in die Elektrodenkammer EK.

Zwischen dem Einlass EA und der Elektrodenkammer EK ist eine Diffusionsbarriere DB ausgebildet, durch die Sauerstoff in die Elektrodenkammer EK eindiffundieren kann.

Des Weiteren weist das Sensorelement S die thermische Isolationshülse IH auf, die auf dem Sensorkörper SK ausgebildet ist und die sich mindestens axial in Richtung der Längsachse L über den Bereich der Elektrodenkammer EK erstreckt.

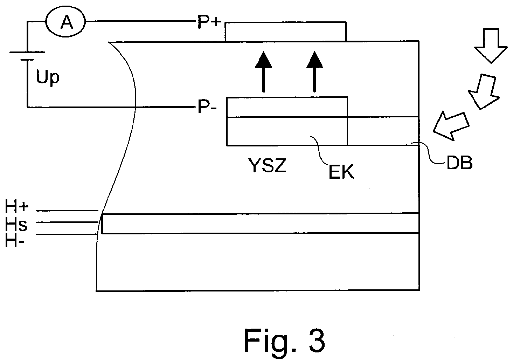

Figur 3 zeigt eine zweite Ansicht des Sensorelements S. Figur 3 verdeutlicht den schichtweisen Aufbau des Sensorelements S. Mit der Elektrodenkammer EK ist eine erste Elektrode P- verbunden, die auch als Kathode bezeichnet werden kann. Zwischen der ersten Elektrode P- und einer zweiten Elektrode P+, die auch als Anode bezeichnet werden kann, ist eine Festkörperelektrolytschicht ausgebildet, welche beispielsweise mittels Yttrium-stabilisierten Zirkonoxids YSZ ausgebildet ist.

Das Sensorelement S weist des Weiteren mehrere Kontakte K auf (siehe Figur 2), beispielsweise zum Ansteuern von Heizelementen und zum Anlegen einer Spannung für den Betrieb des Sensorelements S.

Des Weiteren weist das Sensorelement S einen Halter H auf (siehe Figur 2), der auch zum Abtransport von Wärme dienen kann. Der Halter H ist hierfür beispielsweise aus Aluminium ausgebildet und beispielsweise mittels Kleber auf dem Sensorkörper SK befestigt.

Im Folgenden wird die Funktionsweise des Sensorelements S beschrieben.

Zum Erfassen des Gasgehalts der Umgebung des Sensorelements S wird zwischen der ersten Elektrode P- und der zweiten Elektrode P+ eine Spannungsdifferenz von beispielsweise 0,8 V angelegt. Wenn unter der Kathode der Sauerstoffgehalt zu 0 eingestellt wird und das Sensorelement S in eine sauerstoffhaltige Umgebung eingebracht wird, diffundieren aufgrund des Konzentrationsunterschieds beziehungsweise des Partialdrucksunterschieds zwischen der Umgebung und dem Bereich unter der Kathode, in der nahezu kein Sauerstoff vorhanden ist, Sauerstoffatome durch die Diffusionsbarriere DB und die Kathode in das Substrat des Sensorkörpers SK. Die Sauerstoffatome diffundieren als doppelt negativ geladene Ionen in das Substrat des Sensorkörpers SK, wobei die zur Ionisierung der Sauerstoffatome erforderlichen Elektronen von der elektrisch leitfähigen Kathode geliefert werden. Bei einer zwischen den Elektroden angelegten Spannung wird der Differenzdiffusionsgrenzstrom gemessen. Dieser Strom ist bei einem sauerstoffhaltigen Messgas vom Sauerstoffpartialdruck abhängig. An der Anode werden die Sauerstoffionen wieder in Sauerstoffatome umgewandelt und diffundieren durch die Anode wieder in die sauerstoffhaltige Umgebung. Für eine ausreichende Ionenleitfähigkeit benötigt der Sensorkörper SK eine erhöhte Temperatur. Daher wird der Sensorkörper SK mittels des Heizelements in dem beheizbaren Bereich BB der Elektrodenkammer EK auf eine vorgegebene Betriebstemperatur beispielsweise zwischen 600 °C bis 850 °C beheizt.

Zum Schutz vor thermischem Schock weist das Sensorelement S die Isolationshülse IH auf. Mittels der thermischen Isolation im Bereich der Elektrodenkammer EK erhält das Sensorelement S eine sehr gute Thermoschockbeständigkeit, ohne dass sich hierbei die Messgeschwindigkeit ändert. Des Weiteren fällt aufgrund der Isolation der Wärmetransport durch Konvektion zu einem großen Teil weg. Hierdurch kann mehr Strömung am Sensorelement S akzeptiert werden, womit die Ansprechgeschwindigkeit des Sensorelements S verbessert werden kann.

Die Isolationshülse IH weist beispielsweise Keramikfasern und/oder Metallfasern auf. Die Keramikfasern und/oder Metallfasern sind beispielsweise in einer Metallhülse angeordnet. Alternativ oder zusätzlich sind die Keramikfasern und/oder Metallfasern von der Metallhülse durch einen Luftspalt beabstandet. Beispielsweise hat die Isolationshülse IH ungefähr eine Dicke von 2 mm.

Die Stirnfläche SF des Sensorelements S ist beispielsweise frei von der Isolationshülse IH und die Isolationshülse IH ist von der Stirnfläche SF vorgegeben beabstandet. Die Stirnfläche SF ist beispielsweise derart vorgegeben beabstandet, dass das Sensorelement S leicht aus der Isolationshülse IH herausragt. Hierdurch ist der Einlass EA nicht von der Isolationshülse IH betroffen, wodurch die Messung nicht beeinflusst wird.

## Patentansprüche

1. Sensorvorrichtung (1), umfassend:
- einen Gehäusekörper (4), der einen in dem Gehäusekörper (4) ausgebildeten Strömungskanal (6) aufweist,
- einen in dem Gehäusekörper (4) ausgebildeten Bypass (12), der an einem Abzweig (13) von dem Strömungskanal (6) abzweigt, wobei der Bypass (12) eine Wandung mit einer Öffnung aufweist,
- ein Sensorelement (S) zur Erfassung eines Gasgehalts in einer Umgebung des Sensorelements (S), das zumindest teilweise in der Öffnung in der Wandung des Bypasses (12) angeordnet ist und das aufweist:
-- einen Sensorkörper (SK),
-- eine Elektrodenkammer (EK), die in dem Sensorkörper (SK) ausgebildet ist,
-- ein Heizelement, das in dem Sensorkörper (SK) eingebettet ist, mittels dessen ein vorgegebener Bereich (BB) um die Elektrodenkammer (EK) auf eine vorgegebene Betriebstemperatur beheizbar ist,
-- eine Längsachse (L),
-- einen Einlasskanal (EAK), der mit der Elektrodenkammer (EK) gekoppelt ist und einen Einlass (EA) an der Oberfläche des Sensorkörpers (SK) aufweist,
-- eine thermische Isolationshülse (IH) auf dem Sensorkörper (SK), die sich mindestens axial in Richtung der Längsachse (L) über den Bereich der Elektrodenkammer (EK) erstreckt.

2. Sensorvorrichtung (1) nach Anspruch 1, bei der das Sensorelement (S) eine im Wesentlichen senkrecht zur Längsachse (L) verlaufende Stirnfläche (SF) des Sensorkörpers (SK) aufweist, wobei die Stirnfläche (SF) des Sensorkörpers (SK) den Einlass (EA) aufweist und in dem Bypass (12) angeordnet ist.

3. Sensorvorrichtung (1) nach Anspruch 1 oder 2, bei der der Bypass (12) U-förmig ausgebildet ist.

4. Sensorvorrichtung (1) nach Anspruch 1 oder 2, bei der der Bypass (12) Omega-förmig ausgebildet ist.

5. Sensorvorrichtung (1) nach einem der vorstehenden Ansprüche, bei der der Bypass (12) zumindest ein Strömungselement aufweist, das angeordnet und ausgebildet ist, Verwirbelungen in dem Bypass (12) zumindest zu reduzieren.

6. Sensorvorrichtung (1) nach einem der vorstehenden Ansprüche, bei der der Bypass (12) zumindest eine Kavität aufweist zur Abführung von Fremdpartikeln aus dem Bypass (12).

7. Sensorvorrichtung (1) nach einem der vorstehenden Ansprüche, bei der die Stirnfläche (SF) frei ist von der Isolationshülse (IH) und die Isolationshülse (IH) von der Stirnfläche (SF) vorgegeben beabstandet ist.

8. Sensorvorrichtung (1) nach einem der vorstehenden Ansprüche, bei der der Gehäusekörper (4) einen Kunststoff aufweist oder aus Kunststoff besteht.

9. Sensorvorrichtung (1) nach einem der vorstehenden Ansprüche, bei der Gehäusekörper (4) Aluminium aufweist oder aus Aluminium besteht.

10. Sensorvorrichtung (1) nach einem der vorstehenden Ansprüche, die ein Drucksensorelement und/oder ein Temperatursensorelement aufweist.

11. Sensorvorrichtung (1) nach einem der vorstehenden Ansprüche, die einen Kühlkörper (26) aufweist, der in einem vorgegebenen Bereich mit dem Sensorkörper (SK) gekoppelt ist, wobei der vorgegebene Bereich axial in Richtung der Längsachse (L) außerhalb des Bereichs, in der die Isolationshülse (IH) angeordnet ist, angeordnet ist.

12. Sensorvorrichtung (1) nach einem der vorstehenden Ansprüche, bei der die Isolationshülse (IH) Keramikfasern und/oder Metallfasern aufweist.

13. Sensorvorrichtung (1) nach einem der vorstehenden Ansprüche, bei der die Keramikfasern und/oder Metallfasern in einer Metallhülse angeordnet sind.

14. Sensorvorrichtung (1) nach einem der vorstehenden Ansprüche, bei dem die Keramikfasern und/oder Metallfasern von der Metallhülse durch einen Luftspalt beabstandet sind.

## Claims

1. Sensor device (1), comprising:
- a housing body (4) which has a flow duct (6) formed in the housing body (4),
- a bypass (12) which is formed in the housing body (4) and which branches off from the flow duct (6) at a branching point (13), wherein the bypass (12) has a wall with an opening,
- a sensor element (S) for detecting a gas content in an environment of the sensor element (S), which sensor element is at least partially arranged in the opening in the wall of the bypass (12) and has the following:
-- a sensor body (SK),
-- an electrode chamber (EK) which is formed in the sensor body (SK),
-- a heating element which is embedded in the sensor body (SK) and by means of which a predefined region (BB) around the electrode chamber (EK) can be heated to a predefined operating temperature,
-- a longitudinal axis (L),
-- an inlet duct (EAK) which is coupled to the electrode chamber (EK) and which has an inlet (EA) on the surface of the sensor body (SK),
-- a thermal insulation sleeve (IH) on the sensor body (SK), which thermal insulation sleeve extends at least axially in the direction of the longitudinal axis (L) over the region of the electrode chamber (EK).

2. Sensor device (1) according to Claim 1, in which the sensor element (S) has a face surface (SF), running substantially perpendicular to the longitudinal axis (L), of the sensor body (SK), wherein the face surface (SF) of the sensor body (SK) has the inlet (EA) and is arranged in the bypass (12).

3. Sensor device (1) according to Claim 1 or 2, in which the bypass (12) is of U-shaped form.

4. Sensor device (1) according to Claim 1 or 2, in which the bypass (12) is of omega-shaped form.

5. Sensor device (1) according to one of the preceding claims, in which the bypass (12) has at least one flow element which is arranged and designed to at least reduce turbulence in the bypass (12).

6. Sensor device (1) according to one of the preceding claims, in which the bypass (12) has at least one cavity for the discharge of foreign particles out of the bypass (12).

7. Sensor device (1) according to one of the preceding claims, in which the face surface (SF) is free from the insulation sleeve (IH) and the insulation sleeve (IH) is spaced apart from the face surface (SF) to a predefined extent.

8. Sensor device (1) according to one of the preceding claims, in which the housing body (4) has a plastic or is composed of plastic.

9. Sensor device (1) according to one of the preceding claims, in which the housing body (4) has aluminum or is composed of aluminum.

10. Sensor device (1) according to one of the preceding claims, which has a pressure sensor element and/or a temperature sensor element.

11. Sensor device (1) according to one of the preceding claims, which has a cooling body (26) which is coupled in a predefined region to the sensor body (SK), wherein the predefined region is, axially in the direction of the longitudinal axis (L), arranged outside the region in which the insulation sleeve (IH) is arranged.

12. Sensor device (1) according to one of the preceding claims, in which the insulation sleeve (IH) has ceramic fibers and/or metal fibers.

13. Sensor device (1) according to one of the preceding claims, in which the ceramic fibers and/or metal fibers are arranged in a metal sleeve.

14. Sensor device (1) according to one of the preceding claims, in which the ceramic fibers and/or metal fibers are spaced apart from the metal sleeve by an air gap.

## Revendications

1. Dispositif de détection (1), comprenant:
- un corps de boîtier (4), qui présente un canal d'écoulement (6) formé dans le corps de boîtier (4),
- un contournement (12) formé dans le corps de boîtier (4), qui est dérivé du canal d'écoulement (6) à un branchement (13), dans lequel le contournement (12) présente une paroi avec une ouverture,
- un élément de détecteur (S) pour la détection d'une teneur en gaz dans un environnement de l'élément de détecteur (S), qui est disposé au moins en partie dans l'ouverture dans la paroi du contournement (12) et qui présente:
- un corps de détecteur (SK),
- une chambre d'électrode (EK), qui est formée dans le corps de détecteur (SK),
- un élément de chauffage, qui est noyé dans le corps de détecteur (SK), au moyen duquel une région prédéterminée (BB) autour de la chambre d'électrode (EK) peut être chauffée à une température de fonctionnement prédéterminée,
- un axe longitudinal (L),
- un canal d'entrée (EAK), qui est couplé à la chambre d'électrode (EK) et qui présente une entrée (EA) à la surface du corps de détecteur (SK),
- une douille d'isolation thermique (IH) sur le corps de détecteur (SK), qui s'étend au moins axialement dans la direction de l'axe longitudinal (L) sur la région de la chambre d'électrode (EK).

2. Dispositif de détection (1) selon la revendication 1, dans lequel l'élément de détecteur (S) présente une face frontale (SF) du corps de détecteur (SK) s'étendant essentiellement perpendiculairement à l'axe longitudinal (L), dans lequel la face frontale (SF) du corps de détecteur (SK) présente l'entrée (EA) et est disposée dans le contournement (12).

3. Dispositif de détection (1) selon la revendication 1 ou 2, dans lequel le contournement (12) est réalisé en forme de U.

4. Dispositif de détection (1) selon la revendication 1 ou 2, dans lequel le contournement (12) est réalisé en forme d'oméga.

5. Dispositif de détection (1) selon l'une quelconque des revendications précédentes, dans lequel le contournement (12) présente au moins un élément d'écoulement, qui est disposé et configuré pour au moins réduire les turbulences dans le contournement (12).

6. Dispositif de détection (1) selon l'une quelconque des revendications précédentes, dans lequel le contournement (12) présente au moins une cavité pour l'évacuation de particules étrangères hors du contournement (12).

7. Dispositif de détection (1) selon l'une quelconque des revendications précédentes, dans lequel la face frontale (SF) est libre de la douille d'isolation (IH) et la douille d'isolation (IH) est à une distance prédéterminée de la face frontale (SF).

8. Dispositif de détection (1) selon l'une quelconque des revendications précédentes, dans lequel le corps de boîtier (4) présente une matière plastique ou se compose de matière plastique.

9. Dispositif de détection (1) selon l'une quelconque des revendications précédentes, dans lequel le corps de boîtier (4) présente de l'aluminium ou se compose d'aluminium.

10. Dispositif de détection (1) selon l'une quelconque des revendications précédentes, qui présente un élément de détection de la pression et/ou un élément de détection de la température.

11. Dispositif de détection (1) selon l'une quelconque des revendications précédentes, qui présente un corps de refroidissement (26), qui est couplé au corps de détecteur (SK) dans une région prédéterminée, dans lequel la région prédéterminée est disposée axialement dans la direction de l'axe longitudinal (L) à l'extérieur de la région dans laquelle la douille d'isolation (IH) est disposée.

12. Dispositif de détection (1) selon l'une quelconque des revendications précédentes, dans lequel la douille d'isolation (IH) présente des fibres de céramique et/ou des fibres de métal.

13. Dispositif de détection (1) selon l'une quelconque des revendications précédentes, dans lequel les fibres de céramique et/ou les fibres de métal sont disposées dans une douille métallique.

14. Dispositif de détection (1) selon l'une quelconque des revendications précédentes, dans lequel les fibres de céramique et/ou les fibres de métal sont espacées de la douille de métal par un entrefer.
